# EUROPÄISCHE PATENTANMELDUNG

(11) **EP 2 390 859 A1**
(43) Veröffentlichungstag der Anmeldung: **30.11.2011**
(21) Anmeldenummer: 10450094.7
(22) Anmeldetag: 28.05.2010
(51) Int. Cl.: G08G 1/017, B60C 23/04, G07C 5/00, G08G 1/02

(54) **Vorrichtung zur Detektion von Rädern eines Fahrzeugs**

(71) Anmelder: Kapsch TrafficCom AG, 1120 Wien (AT)
(72) Erfinder: Nagy, Oliver, 1190 Wien (AT)
(74) Vertreter: Weiser, Andreas

(57) **Zusammenfassung**

Vorrichtung (8) zur Detektion von Rädern (4) eines Fahrzeugs (3), die mit Sendern (5) zur Funkkommunikation (6, 6') mit einer Bordelektronik (7) des Fahrzeugs (3) ausgestattet sind, wobei die Vorrichtung (9) einen Fahrbahnabschnitt (10) umfaßt, der mit einem ortsfesten Empfänger (9) zur Funkdetektion (6, 6') der Rad-Sender (5) passierender Fahrzeuge (3) ausgestattet ist.

## Beschreibung

Die vorliegende Erfindung betrifft eine Vorrichtung zur Detektion von Rädern eines Fahrzeugs.

Das Detektieren von Fahrzeugrädern ist bei zahlreichen Anwendungen von Interesse. So kann aus dem Erkennen von Rädern mit Sicherheit das Befahren einer bestimmten Verkehrsfläche erkannt werden, beispielsweise zur Grenzüberwachung oder zur Auslösung bestimmter Aktionen, wie das Auslösen eines Alarms, Einschalten einer Beleuchtung, Öffnen eines Schrankens, Aufnehmen eines Fotos zu Überwachungszwecken usw. Auch moderne Verkehrsgebührensysteme stellen häufig zur Gebührenbemessung auf die Achsanzahl von Fahrzeugen ab, sodaß das Detektieren von Rädern (Radachsen) auch eine wichtige Grundlage für Straßenmaut- oder Parkgebührensysteme sein kann.

Zur Radachsdetektion werden derzeit verschiedenste Systeme eingesetzt, wie in die Fahrbahn eingebettete Induktionsschleifen, Lichtschranken knapp oberhalb der Fahrbahn oder Radar- bzw. Laserscanner über der Fahrbahn, welche im Zuge der Fahrzeugkonturerkennung auch Radachsen detektieren. Allen bekannten Systemen ist gemeinsam, daß sie überaus aufwendig sind: Induktionsschleifen erfordern ein Öffnen der Fahrbahnoberfläche, Lichtschranken benötigen Installationen an beiden Fahrbahnrändern und Versagen bei Straßen mit mehreren Fahrbahnen, und Radar- bzw. Laserscanner sind konstruktiv aufwendig und kostspielig.

Es besteht daher ein ungebrochener Bedarf nach einer einfachen, kostengünstigen und störungsunanfälligen Raddetektionsvorrichtung. Dieses Ziel wird mit einer Vorrichtung der einleitend genannten Art erreicht, die mit Sendern zur Funkkommunikation mit einer Bordelektronik des Fahrzeugs ausgestattet sind, wobei die Vorrichtung einen Fahrbahnabschnitt umfaßt und sich dadurch auszeichnet, daß der Fahrbahnabschnitt mit einem ortsfesten Empfänger zur Funkdetektion der Rad-Sender passierender Fahrzeuge ausgestattet ist.

Die Erfindung beruht auf dem neuartigen Ansatz, die Funkkommunikationsmöglichkeiten sog. "intelligenter Reifen" ("smart tires") zur straßenseitigen Detektion von Fahrzeugrädern auszunützen. Intelligente Reifen bzw. Räder verfügen über eingebaute Zustandssensoren, beispielsweise einen Drucksensor zum Messen des Reifenfülldrucks, einen Profilsensor zum Messen des Profils der Reifenlauffläche, Temperatursensoren zur Messung der Erwärmung des Reifens oder Kraft- bzw. Verformungssensoren zur Messung der Beladung und Belastung des Reifens z.B. zur Steuerung eines Antiblockiersystems (ABS) oder elektronischen Stabilitätsprogramms (ESP). Die Sensormeßdaten werden mittels eines integrierten Senders drahtlos an die Bordelektronik des Fahrzeugs kommuniziert. Dabei kann es sich sowohl um autark gespeiste Sender handeln, die spontan oder auf Abfrage Daten senden, als auch um Transponder, die von einem Abfragesignal energiegespeist werden. Die Vorrichtung der Erfindung detektiert die Funkausstrahlungen der Rad-Sender, entweder durch passives "Mithören" oder durch aktives Anregen bzw. Abfragen ("polling") der passierenden Sender.

Eine bevorzugte Ausführungsform der Erfindung für Fahrzeuge, deren Rad-Sender sog. RFID-Transponder sind (Radio Frequency Identification Transponder), zeichnet sich dadurch aus, daß der Empfänger ein RFID-Sendeempfänger ist, welcher kontinuierlich Transponderabfragen aussendet und die darauffolgenden Transponderantworten detektiert. Solche RFID-Transponder können im einfachsten Fall z.B. statische Kenndaten des Rades ausstrahlen, beispielsweise Herstellungsdatum und Type des Reifens, wie sie von einer Bordelektronik abgefragt werden können, um die Tauglichkeit der Räder zu validieren oder das Fahrzeug auf die Räder abzustimmen. Es ist jedoch ersichtlich, daß für die Zwecke der vorliegenden Erfindung die Art der Information und der Funkkommunikation, welche von den Rad-Sendern abgestrahlt wird, beliebig ist, solange sie von außerhalb des Fahrzeugs detektierbar ist.

Eine bevorzugte Ausführungsform der Erfindung für Fahrzeuge, deren RFID-Transponder auf Abfrage den Reifendruck des Rades senden, besteht darin, daß die Transponderabfragen der Vorrichtung Reifendruckabfragen sind, sodaß sie dem passierenden Rad wie eine abfragende Bordelektronik erscheinen.

Besonders günstig ist es, wenn die Antenne des Empfängers in den Fahrbahnabschnitt integriert ist, wodurch hohe Empfindlichkeit erreicht werden kann.

Eine weitere bevorzugte Ausführungsform der Erfindung zeichnet sich dadurch aus, daß der Empfänger dafür ausgebildet ist, anhand der Funkkommunikationen der Rad-Sender zum selben Fahrzeug gehörende Rad-Sender zu erkennen und zu zählen. Die Erfindung ermöglicht dadurch auf einfache Art und Weise eine Bestimmung der Achsanzahl eines Fahrzeugs.

Gemäß einem weiteren bevorzugten Merkmal der Erfindung kann der Empfänger die von einem Rad-Sender erhaltenen oder abgefragten Daten auf einer straßenseitigen Anzeigeeinrichtung anzeigen. Diese Daten können beispielsweise Art (Sommer- oder Winterreifen), Profiltiefe, Herstellungsdatum usw. des zum Rad-Sender zugehörigen Reifens sein und vom Fahrer selbst oder einer Kontrollperson zu Kontroll- bzw. Aufsichtszwecken verwendet werden.

Falls gewünscht, kann der Empfänger die von einem Rad-Sender erhaltenen oder abgefragten Daten auch an eine zentrale Auswerteeinrichtung weiterleiten.

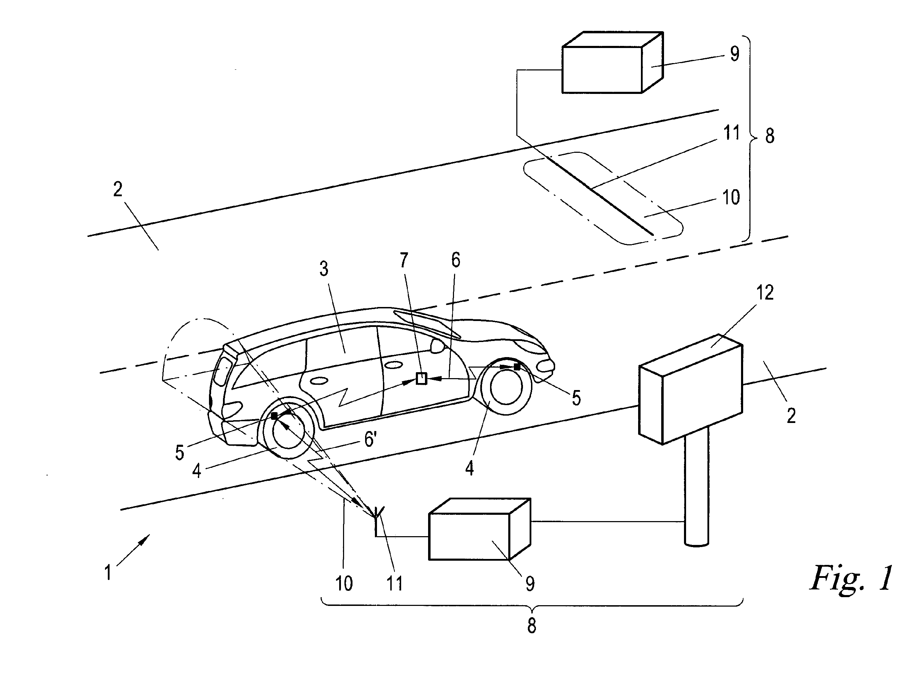

Die Erfindung wird nachstehend anhand eines Ausführungsbeispiels unter Bezugnahme auf die begleitenden Zeichnungen näher erläutert, deren einzige Fig. 1 zwei verschiedene Ausführungsformen von erfindungsgemäßen Vorrichtungen an einer Straße in einer schematischen Perspektivansicht zeigt.

Gemäß Fig. 1 bewegen sich auf einer Straße 1 mit mehreren Fahrbahnen (Spuren) 2 Fahrzeuge 3 mit Rädern 4. Die Räder 4 sind sogenannte "intelligente Reifen" ("smart tires"), welche jeweils einen integrierten Sender 5 zur Funkkommunikation 6 mit einer Bordelektronik 7 des Fahrzeugs 3 besitzen. Die Rad-Sender 5 können beispielsweise Fabrikat, Reifenart (Sommer- oder Winterreifen), Profiltiefe und Herstellungsdatum des Rades 4 über die Funkkommunikation 6 an die Bordelektronik 7 kommunizieren, oder sie stehen mit Sensoren in den Rädern 4 in Verbindung, beispielsweise Druck-, Temperatur-, Kraft-, Dehnsensoren od.dgl., um Informationen über den Betriebszustand der Räder bzw. Reifen 4 wie Luftdruck, Belastung, Verformung, Erwärmung usw. der Bordelektronik 7 mitzuteilen.

Die Funkkommunikationen 6 der Sender 5 werden von einer Vorrichtung 8 zur Detektion von Rädern 4 passierender Fahrzeuge 3 ausgewertet. Die Vorrichtung 8 umfaßt einen ortsfesten Empfänger 9, welcher die Funkkommunikationen 6 der Sender 5 auf einem Abschnitt 10 der Fahrbahn 2, welcher dem Empfangsbereich des Empfängers 9 entspricht, "mithört". Alternativ (oder zusätzlich) kann der Empfänger 9 die Funkkommunikation des Senders 5 durch entsprechende Funkabfragen selbst auslösen, d.h. dem Sender 5 eine abfragende Bordelektronik 7 "vorspiegeln", siehe Funkkommunikation 6'. Beispielsweise sind die Sender 5 RFID-Transponder, und der Empfänger 9 ist ein RFID-Sendeempfänger, der kontinuierlich Transponderabfragen auf den Abschnitt 10 der Fahrbahn 2 hin aussendet und die darauffolgenden Transponderantworten 6' detektiert. Solche Transponderabfragen können beispielsweise standardisierte Reifendruckabfragen sein, wie sie von einer herkömmlichen Bordelektronik 7 an die Sender 5 der Räder 4 abgesetzt werden können.

Der Empfänger 9 kann mit einer gesonderten Antenne 11 ausgestattet sein, welche entweder von der Seite oder oberhalb der Fahrbahn 2 auf den Abschnitt 10 gerichtet oder direkt in den Fahrbahnabschnitt 10 integriert ist.

Der Empfänger 9 kann so programmiert sein, daß er durch Auswertung des Inhalts der Funkkommunikationen 6 bzw. 6' der Rad-Sender 5 die zu ein und demselben Fahrzeug 3 gehörenden Rad-Sender 5 erkennt - beispielsweise anhand einer im Zuge der Funkkommunikationen 6, 6' ausgetauschten Identifikation des Fahrzeugs 3 - und somit die zu einem Fahrzeug 3 gehörenden Räder 4 und damit auch die Radachsen des Fahrzeugs 3 zählt. Alternativ könnte diese Erkennung z.B. auch aus der Detektion mehrerer kurz aufeinanderfolgender Sender 5 und/oder ihrer gleichen Geschwindigkeit (z.B. mittels Doppler-Messungen der Funkkommunikatiönen 6, 6') durchgeführt werden.

Straßenseitig kann eine an den Empfänger 9 drahtgebunden oder drahtlos angeschlossene, ortsfeste oder mobile Anzeigeeinrichtung 12 vorgesehen werden, z.B. eine Anzeigetafel, auf der die vom Rad-Sender 5 im Zuge einer Funkkommunikation 6, 6' erhaltenen oder abgefragten Daten für den Fahrer selbst oder eine Kontrollperson angezeigt werden. Solche Daten können beispielsweise die Geschwindigkeitsklasse, Art (Sommer- oder Winterreifen), Profiltiefe, Herstellungsdatum usw. der Räder 4 sein. Optional können diese Daten auch an eine zentrale Auswerteeinrichtung (nicht gezeigt) weitergeleitet werden.

Die Erfindung ist nicht auf die dargestellten Ausführungsformen beschränkt, sondern umfaßt alle Varianten und Modifikationen, die in den Rahmen der angeschlossenen Ansprüche fallen.

## Patentansprüche

1. Vorrichtung (8) zur Detektion von Rädern (4) eines Fahrzeugs (3), die mit Sendern (5) zur Funkkommunikation (6, 6') mit einer Bordelektronik (7) des Fahrzeugs (3) ausgestattet sind, wobei die Vorrichtung (9) einen Fahrbahnabschnitt (10) umfaßt, **dadurch gekennzeichnet, daß** der Fahrbahnabschnitt (10) mit einem ortsfesten Empfänger (9) zur Funkdetektion (6, 6') der Rad-Sender (5) passierender Fahrzeuge (3) ausgestattet ist.

2. Vorrichtung nach Anspruch 1 für Fahrzeuge, deren Rad-Sender (5) RFID-Transponder sind, **dadurch gekennzeichnet, daß** der Empfänger (9) ein RFID-Sendeempfänger ist, welcher kontinuierlich Transponderabfragen (6') aussendet und die darauffolgenden Transponderantworten (6') detektiert.

3. Vorrichtung nach Anspruch 2 für Fahrzeuge, deren RFID-Transponder (5) auf Abfrage den Reifendruck des Rades (4) senden, **dadurch gekennzeichnet, daß** die Transponderabfragen (6') Reifendruckabfragen sind.

4. Vorrichtung nach einem der Ansprüche 1 bis 3, **dadurch gekennzeichnet, daß** die Antenne (11) des Empfängers (9) in den Fahrbahnabschnitt (10) integriert ist.

5. Vorrichtung nach einem der Ansprüche 1 bis 4, **dadurch gekennzeichnet, daß** der Empfänger (9) dafür ausgebildet ist, anhand der Funkkommunikationen (6, 6') der Rad-Sender (5) zum selben Fahrzeug (3) gehörende Rad-Sender (5) zu erkennen und zu zählen.

6. Vorrichtung nach einem der Ansprüche 1 bis 5, **dadurch gekennzeichnet, daß** der Empfänger (9) von einem Rad-Sender (5) erhaltene oder abgefragte Daten auf einer straßenseitigen Anzeigeeinrichtung (12) anzeigt.

7. Vorrichtung nach einem der Ansprüche 1 bis 6, **dadurch gekennzeichnet, daß** der Empfänger (9) von einem Rad-Sender (5) erhaltene oder abgefragte Daten an eine zentrale Auswerteeinrichtung weiterleitet.
